# EUROPEAN PATENT SPECIFICATION

(11) **EP 0 739 310 B1**
(45) Date of publication and mention of the grant of the patent: **16.09.1998**
(21) Application number: 95903062.8
(22) Date of filing: 26.10.1994
(51) Int. Cl.: C01F 11/46, B01D 53/50, B01D 53/64

(54) **METHOD AND DEVICE FOR PRODUCING HIGH-PURITY GYPSUM**
VERFAHREN UND VORRICHTUNG ZUR HERSTELLUNG VON GIPS MIT HOHER REINHEIT
PROCEDE ET DISPOSITIF POUR LA PRODUCTION DE GYPSE DE GRANDE PURETE

(30) Priority: 22.12.1993 SE 9304242
(43) Date of publication of application: 30.10.1996
(73) Proprietor: ABB FLÄKT AB, S-120 86 Stockholm (SE)
(72) Inventor: RAGNARSSON, Sven, S-360 44 Ingelstad (SE)
(74) Representative: Dahlstrand, Björn
(86) International application number: SE9401003
(87) International publication number: WO9517348

(56) References cited:
- DE-A- 4 123 258
- SE-A- 9 301 945
- US-A- 3 873 532

## Description

This invention relates to a method as set out in appended claims 1-8 for producing high-purity gypsum when cleaning a gas, such as a flue gas, which contains impurities in the form of sulphur dioxide and heavy metals.

Sulphur dioxide is, for instance, formed upon the combustion of material that contains sulphur or sulphur compounds, such as coal, oil, natural gas, peat, and refuse containing rubber and scraps. Generally, such material also contains a certain amount of heavy metals or heavy-metal compounds that are at least partly gasified in the combustion, thus forming part of the generated flue gas.

Frequently, flue gases contain hydrogen chloride as well, which is formed upon the combustion of such material, for instance refuse, as contains chlorine compounds, for example polyvinyl chloride plastic and scraps containing common salt.

Even though this invention is concerned especially with gypsum production in connection with the cleaning of flue gases resulting from the oxidation (combustion) of material of the above type, for instance household refuse, it is by no means restricted thereto, but generally relates to gypsum production in connection with the cleaning of gases containing impurities in the form of sulphur dioxide and heavy metals.

By heavy-metal impurities is here meant, inter alia, cobalt, nickel, copper, zinc, cadmium, tin, mercury, lead and compounds of these metals. The removal of mercury and cadmium is of special interest.

Prior-art cleaning of sulphur-dioxide-containing gases is generally based on the absorption of sulphur dioxide in an aqueous, alkaline washing liquid. At present, use is chiefly made of three different systems for cleaning sulphur-dioxide-containing flue gases, namely calcium-based systems, sodium-based systems, and indirect calcium-based systems. In the calcium-based systems, limestone (CaCO₃) and lime (CaO, Ca(OH)₂) are used as alkali, whereas in the sodium-based systems, sodium hydroxide (NaOH) or soda (Na₂CO₃) is used as alkali. In the indirect calcium-based systems, use is made of a readily-soluble alkali, such as LiOH, KOH or, which is preferred, NaOH, in order to primarily absorb the sulphur dioxide in a gas washer. After absorbing sulphur dioxide, the washing liquid is regenerated outside the gas washer by means of a more sparingly-soluble alkali, such as lime. Since a readily-soluble alkali, such as NaOH, is used in the gas washer, a much larger amount of alkali is dissolved in the washing liquid in the gas washer, and the risk of deposits is much lower than in a calcium-based system. The larger amount of alkali dissolved in the washing liquid enables a reduced recycling flow of washing liquid in the gas washer and improves the capacity of the washing liquid to absorb sulphur dioxide.

This invention concerns an indirect calcium-based system for absorbing sulphur dioxide.

As an instance of the prior art, mention may be made of US 3,873,532, which teaches a method for wet cleaning of sulphur-dioxide-containing flue gases. According to the US specification, the sulphur-dioxide-containing flue gases are conducted to a gas washer, where they are washed with an aqueous, alkaline washing liquid based on sodium hydroxide or sodium carbonate. The alkaline washing liquid is circulated by a pump from a tank to the gas washer and then back to the tank. A partial flow of washing liquid is withdrawn from the gas washer to be regenerated and is thus conducted to a vessel where calcium ions are added in the form of slaked lime (Ca(OH)₂). Thereafter, the partial flow of washing liquid is supplied to a sedimentation installation for sedimenting precipitated calcium sulphate, which is withdrawn and filtered off. Part of the flow of calcium sulphate withdrawn from the sedimentation installation is recycled to the vessel for the addition of slaked lime. From the sedimentation installation, the washing liquid thus rid of precipitated calcium sulphate is conducted to a device for the addition of soda (Na₂CO₃) and the sedimentation of precipitated calcium carbonate. The precipitated calcium carbonate is recycled to the vessel for the addition of slaked lime, whereas the regenerated washing liquid is recycled to the tank for alkaline washing liquid.

It is also known to clean gases containing both sulphur dioxide and hydrogen chloride. Such cleaning comprises two stages, namely a first stage, in which the main part of the hydrogen chloride is absorbed in an acid, aqueous wash solution, and a second stage, in which the main part of the sulphur dioxide is absorbed in an alkaline, aqueous wash solution. The second stage may consist of a calcium-based system of the above type in which limestone is added, the above-mentioned indirect calcium-based system according to US-P 3,873,532 having been reserved for the cleaning of gases containing sulphur dioxide only.

In the first stage for absorbing hydrogen chloride, the incoming polluted gas encounters droplets of a circulating, acid, aqueous wash solution. The hydrogen chloride, but essentially no sulphur dioxide, is absorbed in the wash solution. A partial flow is withdrawn from the circulating wash solution and is neutralised with lime and soda, whereupon the absorbed heavy-metal impurities (copper, lead, mercury, cadmium, etc.) are precipitated by the addition of sodium sulphide (Na₂S).

After the separation of the precipitated heavy-metal sulphide sludge, a sulphate-containing liquid is added to the partial flow with a view to precipitating gypsum.

After the precipitation of gypsum and the separation of the gypsum sludge, the remaining washing liquid may be treated, e.g. by evaporation, in order to recover common salt, which may then be used for recovering hydrochloric acid.

In the prior art described above, considerable amounts of gypsum are obtained when regenerating the wash solution in the sulphur-dioxide-absorption stage. If the process is to be economically viable, the gypsum has to be either disposed of at no cost or but a low cost or sold at a profit. It is the impurity content of the gypsum that decides whether the gypsum can be sold at a profit, e.g. for the production of gypsum boards, or be disposed of at no cost or but a low cost as construction waste, or whether it has to be dumped at high cost in e.g. old mines. It is, above all, the content of heavy-metal impurities that decides whether the gypsum may be sold at a profit or whether heavy charges will have to be paid for dumping.

The gypsum produced from sulphur-dioxide-containing gases in accordance with the prior art contains a not insubstantial amount of heavy-metal impurities. Since stricter national and international regulations concerning the impurity content of gypsum continue to be introduced, there is a demand for minimising the impurity content of the gypsum produced when cleaning sulphur-dioxide-containing gas.

Further, DE 41 23 258 discloses a method for cleaning flue gases containing sulphur dioxide and other harmful substances, such as mercury. In this method, the sulphur dioxide is absorbed in a wash solution and separated as gypsum. This method aims at reducing the mercury content of the gypsum, which is achieved by adding chemicals, such as sodium sulphide, that react with mercury to form insoluble compounds, or by adding a mercury-adsorbing agent, such as active carbon, either to the flue gases before the removal of sulphur dioxide or to the wash solution. The separated mercury (which is in the form of an insoluble mercury compound or adsorbed mercury) and the precipitated gypsum are then obtained in the form of a mixture. According to the DE specification, the mercury and the gypsum may then be separated from each other as a result of the difference in particle-size distribution, shape and/or density. The fact that one first produces a mixture of gypsum and impurities and then separates the impurities from this mixture is disadvantageous, and it is, in addition, difficult to achieve a complete separation, i.e. to obtain high-purity gypsum. In actual practice, the precipitation of mercury takes place at a fairly low pH (below 8), which means that the precipitation of mercury and other heavy metals is not as complete as would be desired.

The invention aims at reducing or obviating the drawbacks of the prior art and to provide the production of high-purity gypsum from a sulphur-dioxide-containing gas that contains further impurities in the form of heavy metals and preferably hydrogen chloride as well. According to the invention, this is achieved by absorbing the sulphur dioxide in a wash solution and precipitating it in the form of gypsum that is separated from the wash solution; and then adding carbonate and sulphide to the remaining wash solution so as to precipitate heavy-metal carbonates and sulphides at a high pH.

Since the gypsum and the heavy-metal impurities are precipitated separarely in the invention, it is possible to obtain high-purity gypsum. The precipitation of the heavy-metal impurities is practically complete, owing to the fact that it is carried out at a high pH.

Thus, the invention provides a method for producing high-purity gypsum from a sulphur-dioxide-containing gas, such as a flue gas, which contains impurities in the form of heavy metals, said gas being washed, in a sulphur-dioxide-absorption stage in a primary circuit, with an aqueous wash solution based on alkali metal, preferably sodium, for absorbing sulphur dioxide and heavy-metal impurities, whereupon a partial flow of the wash solution is withdrawn from the primary circuit and regenerated in a secondary circuit by the addition of a calcium-ion source for precipitation and separation of gypsum and by the addition of a carbonate-ion source for precipitation of carbonate, characterised in that a sulphide-ion source is added to the partial flow after the addition of the calcium-ion source.

Further advantages and characteristics of the invention will appear from the following description and the appended claims.

Since the pH in the secondary circuit is alkaline, the precipitation of the heavy-metal impurities takes place at a high pH, which contributes to making the precipitation more complete, the solubility minimum of the precipitated heavy-metal sulphides being in the alkaline range. Thus, the precipitation of heavy-metal impurities conveniently takes place at a pH of about 8-14, preferably about 11-14, and most preferred about 13, in order to maximise the precipitation.

As a result of the addition of the carbonate-ion source, any excess of calcium ions is precipitated as calcium carbonate, and some of the heavy-metal impurities are precipitated as carbonates. However, the addition of the carbonate-ion source only results in incomplete precipitation of the heavy-metal impurities. In order to obtain an essentially complete precipitation of the heavy-metal impurities, a sulphide-ion source is added. In the invention, it is essential that the sulphide-ion source (as well as the carbonate-ion source) is added after the calcium-ion source in order to avoid a mixture of precipitated gypsum and precipitated heavy-metal impurities. This requirement apart, the carbonate-ion source and the sulphide-ion source may be added in optional order, but it is preferred that they are added at the same time.

As sulphide-ion source, one may choose material having the capacity to generate sulphide ions for the precipitation of heavy-metal sulphides, for instance sulphide compounds that are more readily soluble than the heavy-metal sulphides to be precipitated. Examples of such sulphide-ion sources are sulphides of alkali metals, such as sodium sulphide and potassium sulphide, and sulphides of alkaline-earth metals, such as calcium sulphide and iron sulphide. For reasons of availability and owing to the fact that the wash solution is based on sodium, it is preferred that sodium sulphide is the sulphide-ion source employed.

As carbonate-ion source, use can be made of substances that, when contacted with the wash solution, are capable of generating carbonate ions. Examples of such substances are carbonates of alkali metals, such as sodium carbonate (soda) and potassium carbonate, as well as carbon dioxide. For reasons of availability and owing to the fact that the wash solution is based on sodium, it is preferred that sodium carbonate (soda) is the carbonate-ion source employed.

As calcium-ion source, use can be made of calcium-containing compounds capable of generating calcium ions for the precipitation of gypsum (calcium sulphate) when contacted with the wash solution. Preferably, slaked lime (Ca(OH₂)) is the calcium-ion source employed.

The sparingly-soluble carbonates and sulphides precipitated upon the addition of the carbonate-ion source and the sulphide-ion source are separated from the partial flow of wash solution in the secondary circuit, whereupon the partial flow thus rid of precipitated material is recycled to the primary circuit for renewed absorption of sulphur dioxide. Since the precipitation of heavy-metal impurities is essentially complete in the invention, as mentioned in the foregoing, the partial flow recycled to the primary circuit is essentially free of heavy metals, which means that there is no accumulation of heavy-metal impurities in the washing liquid with the ensuing risk of coprecipitation with the gypsum and pollution thereof.

As mentioned in the foregoing, the sulphur-dioxide-containing gas contains, in a preferred aspect of the invention, a further impurity in the form of hydrogen chloride. Thus, the invention also comprises a hydrogen-chloride-absorption stage. If so, the material precipitated upon the addition of the carbonate-ion source and the sulphide-ion source in the sulphur-dioxide-absorption stage is preferably conducted to the hydrogen-chloride-absorption stage, as will be described in more detail further on.

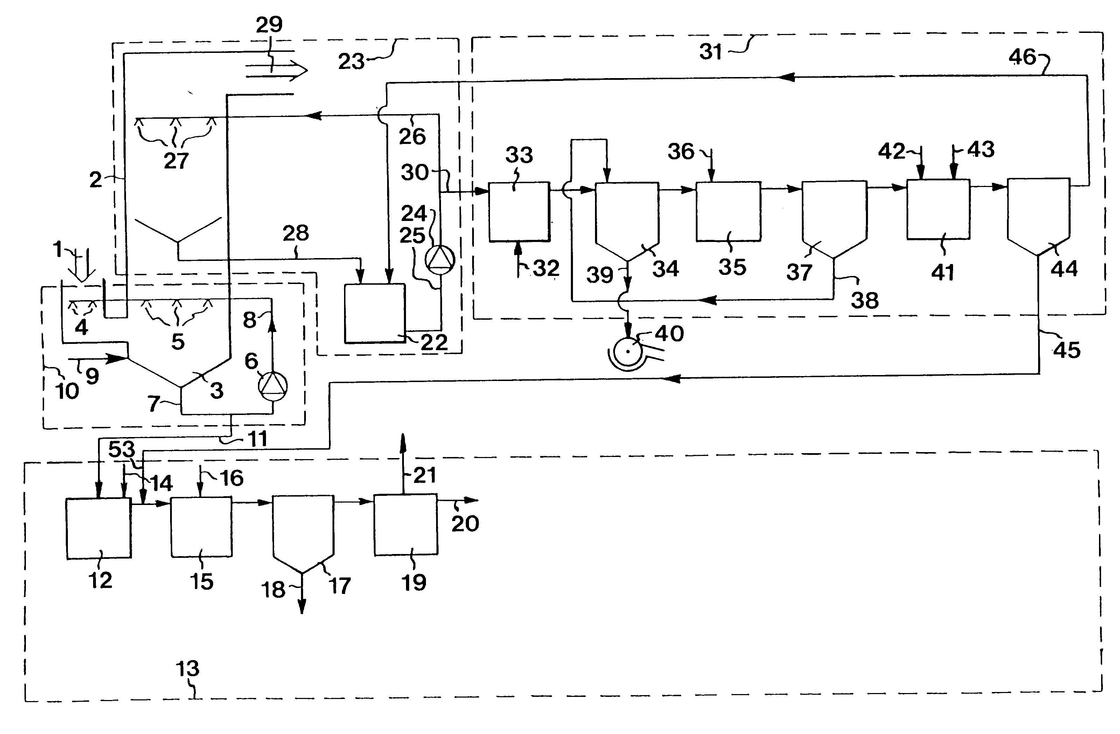

For clarifying purposes, the invention will now be described with reference to the accompanying drawing, which schematically illustrates a preferred embodiment of a device according to the invention.

As mentioned above, a preferred aspect of the invention concerns the production of gypsum from a sulphur-dioxide-containing gas which, in addition to the heavy-metal impurities, contains an impurity in the form of hydrogen chloride. The illustrated device is intended for the production of gypsum from such a gas, and the device thus comprises a stage for hydrogen-chloride absorption, as well as a stage for sulphur-dioxide absorption. It will be appreciated that the hydrogen-chloride-absorption stage may be dispensed with if gypsum is produced from a sulphur-dioxide-containing gas having a low hydrogen chloride content (for instance < 150 mg/Nm³).

As shown in the Figure, a gas 1 containing sulphur dioxide, heavy-metal impurities and hydrogen chloride, for instance flue gas generated upon refuse incineration, is supplied to a gas washer or scrubber 2 and is there contacted with an acid, aqueous washing liquid 3, which is finely divided by nozzles 4 in a so-called quencher, as well as by nozzles 5 in the gas washer itself. The washing liquid 3 is circulated by a pump 6 through a conduit 7, 8 from the gas washer to the nozzles 4, 5. Fresh washing liquid can be supplied at 9. This arrangement involving recycling of the wash solution 3 forms a primary circuit 10, which is indicated by dashed lines in the Figure.

A partial flow is drawn off from the circulating washing liquid in the primary stage 10 through a conduit 11 to a container 12 forming part of a secondary circuit 13, as indicated by dashed lines in the Figure. As indicated by the arrow 14, the partial flow is neutralised in the container 12 by means of an alkali selected from the group comprising hydroxides, oxides, carbonates and bicarbonates of sodium and calcium. Sodium carbonate or calcium carbonate is added, depending on whether the chloride is to be recovered as common salt or be discharged to a recipient. In the former case, the partial flow is fed to a container 15, where sodium sulphide is added, as indicated by the arrow 16, in order to precipitate any heavy-metal impurities as sulphides. The partial flow is then conducted to a vessel 17, where the precipitated heavy-metal sulphides are separated as sludge, as indicated by the arrow 18.

The partial flow of wash solution, which now contains the absorbed hydrogen chloride in the form of sodium chloride, is then treated with a view to recovering sodium chloride or hydrochloric acid. For instance, the partial flow may be conducted to an evaporator 19, where the sodium-chloride solution is evaporated, such that the sodium chloride is recovered, as indicated by the arrow 20. The water removed by evaporation leaves the evaporator at 21 after condensation and may suitably be used elsewhere in the inventive device, for instance as additional water 9 in the gas scrubber 2.

If calcium carbonate is instead added as neutralising agent in the container 12, the wash solution chiefly contains calcium chloride after the vessel 17 and may thus without much ado be discharged to a suitable recipient, such as a stream.

In addition to the first stage for removing hydrogen chloride, the gas washer 2 includes a second stage for removing sulphur dioxide and any remaining heavy-metal impurities from the gas 1 (when there is no hydrogen-chloride-absorption stage, all the heavy-metal impurities are removed in the stage for removing sulphur dioxide). The second stage, i.e. the sulphur-dioxide-absorption stage, is designed as a so-called indirect lime process, as mentioned in the foregoing.

The sulphur-dioxide-absorption stage comprises a container 22 holding an aqueous wash solution based on alkali metal, preferably sodium, and originally, i.e. before the absorption of sulphur dioxide, consisting of an alkaline aqueous solution of an alkali metal compound, such as an oxide, a hydroxide or a carbonate of sodium, potassium or lithium. Preferably, use is made of a sodium compound, such as sodium hydroxide. By means of a pump 24, the washing liquid is circulated in a primary circuit 23 through conduits 25, 26 to nozzles 27, by means of which the washing liquid is finely divided and contacted with the sulphur-dioxide-containing gas. When thus contacted with the gas, the wash solution absorbs sulphur dioxide and heavy-metal impurities, whereupon it is collected and recycled to the container 22 via a conduit 28. The gas thus rid of sulphur dioxide and heavy-metal impurities leaves at 29.

In order to regenerate the wash solution, a partial flow is drawn off from the primary circuit 23 through a conduit 30 to a secondary circuit 31 where, if need be, it is first treated with an oxidising agent, such as air, as indicated by the arrow 32, in a container 33 in order to convert all the sulphur dioxide absorbed to sulphate.

The partial flow is then fed to a container 34, to be followed by a container 35, where a calcium-ion source is added, as indicated by the arrow 36. Preferably, the calcium-ion source consists of lime, for instance burnt lime (CaO) or, which is most preferred, slaked lime (Ca(OH)₂). As a result of the addition of calcium ions, the sulphate content of the partial flow is precipitated as calcium sulphate (gypsum), which then is sedimented in a container 37, from which it is drawn off through a conduit 38. The thus-separated gypsum sludge may be drawn off directly through the conduit 38, but is preferably recycled to the container 34, as shown in the Figure, so that impurities in the gypsum crystals may be dissolved to a certain extent while at the same time the thus-cleaned gypsum crystals are given the opportunity to grow in size. The gypsum withdrawn from the container 34, as indicated by the arrow 39, has a very high degree of purity and may after dewatering, as schematically indicated by a filter 40, be used for producing gypsum boards, among other things. The partial flow of wash solution thus rid of gypsum precipitate is then supplied to a container 41, where a carbonate-ion source is added, as indicated by the arrow 42. The carbonate-ion source may, for instance, consist of sodium carbonate (soda) or a carbon-dioxide-containing gas that, when contacted with water, forms carbonate ions. The addition of the carbonate-ion source results in the precipitation of any excess of calcium ions as sparingly-soluble calcium carbonate, as well as the precipitation of some of the heavy-metal impurities as carbonates. Apart from the carbonate-ion source, a sulphide-ion source is added, as indicated by an arrow 43. As mentioned in the foregoing, the sulphide-ion source may consist of different sulphide-containing materials, but preferably consists of sodium sulphide (Na₂S). The sulphide-ion source need not be added in the same container as the carbonate-ion source but may, if so desired, be added in a subsequent container (not shown). From considerations of economy and space, it is, however, preferred that the carbonate-ion source and the sulphide-ion source be added in the same container. The addition of the sulphide-ion source results in the precipitation of the heavy-metal impurities remaining in the partial flow in the form of sparingly-soluble sulphides. Since an alkalising calcium-ion source, such as slaked lime, and a carbonate-ion source, such as soda, have been added to the partial solution, the latter has, when the sulphide-ion source is added, a high pH normally in the range of about 11-14, mostly about 13, which contributes to maximising the precipitation of heavy-metal sulphides, the latter having a solubility minimum in this pH range. Then, the precipitated carbonate and sulphide material is sedimented in a container 44. The thus-sedimented precipitate is withdrawn from the container 44 through a conduit 45 and may then be disposed of, e.g. by dumping. In the preferred aspect of the invention described above, in which the sulphuroxide-containing gas also contains hydrogen chloride and the inventive device consequently comprises a hydrogen-chloride-absorption stage, it is, however, preferred that the sedimented precipitate be conducted from the container 44 to the secondary circuit 13 of the hydrogen-chloride-absorption stage, more specifically to a point between the neutralisation container 12 and the sulphide; precipitation container 15, as indicated by the arrow 45. Neutralisation mostly takes place in the secondary circuit 13 in two stages, in which case the precipitate preferably is supplied after the first neutralisation stage. By thus supplying the precipitate to the secondary circuit of the hydrogen-chloride-absorption stage, one obtains a certain dissolution of the precipitated carbonate material and a reprecipitation thereof as sulphide upon the addition of the sulphide-ion source 16 in the container 15. Furthermore, all the precipitated heavy-metal impurities are thus obtained at one site only, which facilitates handling.

The partial flow rid of heavy-metal impurities in the container 44 is then conducted through a conduit 46 from the secondary circuit 31 back to the primary circuit 23 and the container 22 for renewed absorption of sulphur dioxide in the gas washer 2.

Since the wash solution is essentially rid of all heavy-metal impurities by sulphide precipitation in the sulphur-dioxide-absorption stage during the regeneration in the secondary circuit 31, there is no accumulation of heavy-metal impurities in the wash solution, but these impurities are kept at a minimum and do not pollute the gypsum precipitated in the secondary circuit 31.

Although the invention has been described with reference to special embodiments in the foregoing, it will be appreciated that variants thereof are conceivable within the scope of the appended claims.

## Claims

1. A method for producing high-purity gypsum from a sulphur-dioxide-containing gas (1), such as a flue gas, which contains impurities in the form of heavy metals, said gas being washed, in a sulphur-dioxide-absorption stage in a primary circuit (23), with an aqueous wash solution based on alkali metal, preferably sodium, for absorbing sulphur dioxide and heavy-metal impurities, whereupon a partial flow of the wash solution is withdrawn from the primary circuit (23) and regenerated in a secondary circuit (31) by
a) the addition of a calcium ion-source (36),
b) precipitation and
c) separation of gypsum then by
d) the addition of a carbonate ion-source (42) and
e) precipitation of carbonate,
**characterised** in that
f) a sulphide ion-source (43) is added to the partial flow after the
c) separation of gypsum.

2. A method as set forth in claim 1, wherein the sulphide ion-source (43) is added to the partial flow at a pH of about 8-14, preferably about 11-14, especially about 13.

3. A method as set forth in claim 1 or 2, wherein the sulphide ion-source (43) is added to the partial flow at the same time as the carbonate ion-source (42).

4. A method as set forth in any one of the preceding claims, wherein sodium sulphide is added as the sulphide ion-source (43).

5. A method as set forth in any one of the preceding claims, wherein slaked lime is added as the calcium ion-source (36).

6. A method as set forth in any one of the preceding claims, wherein sodium carbonate (soda) or carbon dioxide is added as the carbonate ion-source (42).

7. A method as set forth in any one of the preceding claims, wherein, after the addition of carbonate ions and sulphide ions, the partial flow is cleaned of precipitated material, and the thus-cleaned partial flow is recycled to the primary circuit (23).

8. A method as set forth in any one of the preceding claims, wherein the gas (1) contains a further impurity in the form of hydrogen chloride, which is removed in a hydrogen-chloride-absorption stage, and the material precipitated upon the addition of the carbonate ion-source (42) and the sulphide ion-source (43) in the sulphur-dioxide-absorption stage is conducted to the hydrogen-chloride-absorption stage.

## Patentansprüche

1. Verfahren zur Herstellung von hochreinem Gips aus einem Schwefeldioxid-haltigen Gas (1), z.B. einem Abgas, das Verunreinigungen in Form von Schwermetallen enthält, in dem das Gas in einer Schwefeldioxid-Absorptions-Stufe in einem Primärkreislauf (23) mit einer wäßrigen Waschlösung auf der Basis von Alkalimetall, vorzugsweise Natrium, zur Absorption von Schwefeldioxid und Schwermetallverunreinigungen gewaschen wird, wobei ein Teilstrom der Waschlösung aus dem Primärkreislauf (23) abgezogen wird und in einem Sekundärkreislauf (31) durch
a) den Zusatz einer Calciumionen-Quelle (36),
b) Ausfällen und
c) Abtrennen von Gips, dann durch
d) den Zusatz einer Carbonationen-Quelle (42) und
e) Ausfällen von Carbonat
regeneriert wird,
dadurch **gekennzeichnet,** daß
f) eine Sulfidionen-Quelle (43) dem Teilstrom nach der
c) Abtrennung von Gips zugesetzt wird.

2. Verfahren nach Anspruch 1, wobei die Sulfidionen-Quelle (43) dem Teilstrom bei einem pH von etwa 8 bis 14, vorzugsweise etwa 11 bis 14, insbesondere etwa 13 zugesetzt wird.

3. Verfahren nach Anspruch 1 oder Anspruch 2, wobei die Sulfidionen-Quelle (43) dem Teilstrom gleichzeitig mit der Carbonationen-Quelle (42) zugesetzt wird.

4. Verfahren nach einem der vorangehenden Ansprüche, wobei Natriumsulfid als Sulfidionen-Quelle (43) zugesetzt wird.

5. Verfahren nach einem der vorangehenden Ansprüche, wobei Löschkalk als Calciumionen-Quelle (36) zugesetzt wird.

6. Verfahren nach einem der vorangehenden Ansprüche, wobei Natriumcarbonat (Soda) oder Kohlendioxid als Carbonationen-Quelle (42) zugesetzt wird.

7. Verfahren nach einem der vorangehenden Ansprüche, wobei der Teilstrom nach dem Zusatz von Carbonationen und Sulfidionen von ausgefälltem Material gereinigt wird, und der so derart gereinigte Teilstrom zu dem Primärkreislauf (23) zurückgeführt wird.

8. Verfahren nach einem der vorangehenden Ansprüche, wobei das Gas (1) eine weitere Verunreinigung in Form von Chlorwasserstoff enthält, der in einer Chlorwasserstoff-Absorptions-Stufe entfernt wird, und das beim Zusatz der Carbonationen-Quelle (42) und der Sulfidionen-Quelle (43) in der Schwefeldioxid-Absorptionsstufe ausgefällte Material zu der Chlorwasserstoff-Absorptions-Stufe geleitet wird.

## Revendications

1. Procédé de production de gypse de grande pureté à partir d'un gaz (1) contenant du dioxyde de soufre, tel qu'un gaz de carneau, qui contient des impuretés sous la forme de métaux lourds, ce gaz étant lavé dans un stade d'absorption du dioxyde de soufre dans un circuit (23) primaire, par une solution aqueuse de lavage à base de métal alcalin, de préférence à base de sodium, pour absorber du dioxyde de soufre et des impuretés à base de métaux lourds, un courant partiel de la solution de lavage étant soutiré du circuit (23) primaire et régénéré dans un circuit (31) secondaire par
a) l'addition d'une source (36) d'ions calcium,
b) une précipitation et
c) une séparation du gypse puis par
d) l'addition d'une source (42) d'ions carbonate et
e) une précipitation de carbonate,
caractérisé en ce que
f) une source (43) d'ions sulfure est ajoutée au courant partiel après la
g) séparation du gypse.

2. Procédé suivant la revendication 1, dans lequel la source (43) d'ions sulfure est ajoutée au courant partiel à un pH de 8 à 14 environ, et, de préférence, de 11 à 14 environ, en particulier de 13 environ.

3. Procédé suivant la revendication 1 ou 2, dans lequel la source (43) d'ions sulfure est ajoutée au courant partiel en même temps que la source (42) d'ions carbonate.

4. Procédé suivant l'une quelconque des revendications précédentes, dans lequel du sulfure de sodium est ajouté comme source (43) d'ions sulfure.

5. Procédé suivant l'une quelconque des revendications précédentes, dans lequel de la chaux éteinte est ajoutée comme source (36) d'ions calcium.

6. Procédé suivant l'une quelconque des revendications précédentes, dans lequel du carbonate de sodium ou du dioxyde de carbone est ajouté comme source (42) d'ions carbonate.

7. Procédé suivant l'une quelconque des revendications précédentes, dans lequel après l'addition d'ions carbonate et d'ions sulfure, le courant partiel est débarrassé de matière précipitée et le courant partiel ainsi débarrassé est recyclé au circuit (23) primaire.

8. Procédé suivant l'une quelconque des revendications précédentes, dans lequel le gaz (1) contient une autre impureté sous la forme de chlorure d'hydrogène, qui est éliminée dans un stade d'absorption du chlorure d'hydrogène et la matière précipitée par l'addition de la source (42) d'ions carbonate et de la source (43) d'ions sulfure dans le stade d'absorption du dioxyde de soufre est envoyée au stade d'absorption de chlorure d'hydrogène.
